# FASCICULE DE BREVET EUROPEEN

(11) **EP 0 482 968 B1**
(45) Date de publication et mention de la délivrance du brevet: **11.06.1997**
(21) Numéro de dépôt: 91402493.0
(22) Date de dépôt: 19.09.1991
(51) Int. Cl.: C04B 35/52, C04B 35/80, C04B 35/56

(54) **Composite à matrice carbure de silicium utilisable comme couche pare-flamme**
Als Flammschutzschicht verwendbarer Verbundwerkstoff mit Siliciumcarbidmatrix
Silicon carbide matrix composite useable as flame protection layer

(30) Priorité: 24.09.1990 FR 9011734
(43) Date de publication de la demande: 29.04.1992
(73) Titulaire: AEROSPATIALE Société Nationale Industrielle, 75781 Paris Cédex 16 (FR)
(72) Inventeur: Bergerat,Jean-Michel, F-92400 Courbevoie (FR); Lengronne,Bernard, F-64460 Monsegur (FR); Ferrier-Pegot,Christiane, F-91430 Igny (FR); Drouet-Petoin,Claudette, F-65290 Juillan (FR); Menessier,Eric, F-65000 Tarbes (FR)
(74) Mandataire: Lepeudry-Gautherat, Thérèse

(56) Documents cités:
- DE-A- 3 327 659
- US-A- 3 700 535
- US-A- 4 735 850
- US-A- 4 925 815

## Description

La présente invention concerne un composite à matrice carbure de silicium renforcée de fibres réfractaires capable de résister à des conditions mécaniques et thermiques sévères, en atmosphère oxydante et/ou réductrice, telles que celles subies par les couches pare-flammes des chambres de moteurs statoréacteurs. Elle concerne plus particulièrement un procédé d'obtention d'un tel composite.

Le carbure de silicium est la céramique non oxyde qui résiste le mieux aux hautes températures en milieu oxydant, la couche de silice qui se forme en surface protégeant le matériau de l'oxydation.

Toutefois, si le carbure de silicium a des caractéristiques mécaniques élevées à hautes températures (jusqu'à 750 MPa), il conserve une rupture fragile.

On utilise donc habituellement un renfort fibreux pour rendre la rupture moins fragile.

Parmi les fibres réfractaires conservant leurs caractéristiques mécaniques à températures élevées on mentionnera plus particulièrement les fibres de carbone, dont le degré de graphitisation varie de 0 à 100 %.

En utilisant de telles fibres associées à une matrice carbure de silicium on sait réaliser des matériaux composites à très hautes performances, utilisables notamment dans les chambres de moteurs statoréacteurs, de tels composites étant réalisés par la technique dite de "vapodéposition".

Selon cette technique, le support fibreux, bobiné ou tissé, est placé dans un four de vapodéposition où il est densifié lentement par craquage d'un ou plusieurs produits précurseurs du type organosilanes, substitués ou non.

Comme tout procédé de vapodéposition, une telle opération est très longue et délicate, et nécessite la mise en place de moyens industriels importants pour répondre aux productions séries et aux réalisations de pièces complexes de grandes dimensions.

Le brevet US-A-4 735 850 enseigne un procédé de fabrication d'articles en composite réfractaire selon lequel on utilise un tissu de fibres, tressées ou non tressées, qui est ensuite imprégné d'un liant pouvant contenir, entre autres, des particules de carbure de silicium.

L'invention propose par conséquent un procédé simple, rapide et facilement utilisable pour la réalisation de pièces complexes de grandes dimensions, selon lequel on obtient un composite à matrice carbure de silicium renforcée de fibres réfractaires en formant un précurseur par bobinage de fibres réfractaires imprégnées d'une résine chargée de particules de carbure de silicium et en soumettant ensuite ce précurseur à un traitement thermique pour dégrader la résine et obtenir un frittage des particules de carbure de silicium.

On peut ainsi réaliser des pièces de toutes formes et de toutes dimensions, cylindriques ou de section évolutive monotone, par exemple des viroles cylindriques de grandes dimensions utilisées comme pare-flamme dans les chambres de moteurs statoréacteurs. Les pièces ainsi obtenues ont une résistance mécanique suffisante pour supporter la pression et le choc thermique générés par la phase booster et sont capables de résister aux contraintes mécaniques engendrées pendant la phase de croisière à des températures de 2000°C, en milieu oxydant.

Plus précisément, l'invention a pour un objet un procédé d'obtention d'un composite densifié qui résiste à des contraintes mécaniques et thermiques en milieu oxydant et/ou réducteur et qui comprend une matrice carbure de silicium renforcée par des fibres réfractaires, caractérisé en ce qu'il comprend essentiellement les étapes successives consistant à :
- former un précurseur par bobinage de fibres réfractaires avec imprégnation simultanée par une résine contenant des particules de carbure de silicium ;
- soumettre le précurseur ainsi obtenu à un traitement thermique comprenant un cycle de décrassage utilisant le carbone libéré par la pyrolyse de la résine ; puis
- soumettre le précurseur ainsi traité à un traitement thermique de frittage des particules de carbure de silicium.

En outre l'invention concerne une couche pare-flamme de chambre de moteur statoréacteur comme revendiquée dans la revendication 15.

Selon l'invention, on obtient le précurseur en bobinant, sous un angle choisi en fonction des caractéristiques de la pièce à réaliser, des mèches de carbone imprégnées par une résine, à l'état pur ou dilué, donnant par pyrolyse un taux de coke élevé, avec ou sans résidu de carbure ou de nitrure de silicium, cette résine contenant des particules de carbure de silicium, par exemple de la poudre de carbure de silicium.

La quantité de carbure de silicium dans la résine est avantageusement comprise entre 40 et 60 % en poids.

Selon un mode de mise en oeuvre préféré de l'invention, on utilise pour l'imprégnation une solution d'une résine phénolique dans un solvant léger, tel que l'acétone.

Il peut en outre être intéressant d'enrichir la solution de résine de réactifs vis-à-vis du coke donné par la résine.

Par ailleurs on dope avantageusement le carbure de silicium, dont la granulométrie est préférentiellement inférieure à 5µm, par des ajouts favorisant le frittage à basses températures, tels que par exemple le bore.

On réalise l'imprégnation simultanément avec le bobinage, selon des techniques connues de l'homme de l'art.

La quantité de résine utilisée doit être en principe suffisante pour apporter lors du décrassage le carbone "nettoyeur", destiné à absorber l'oxygène résiduel se trouvant autour du carbure de silicium. La quantité de résine et ses caractéristiques de viscosité doivent bien entendu être ajustées pour permettre une bonne imprégnation des fibres et également un entraînement correct des particules de carbure de silicium autour de celles-ci.

On soumet ensuite ce précurseur à un cycle de décrassage, effectué en plusieurs étapes, de préférence en milieu oxydant puis sous azote. On effectue par exemple cette opération jusqu'à 250°C en milieu oxydant (air) puis jusqu'à 600°C sous azote.

On réalise ensuite le frittage thermique du précurseur ayant subi l'étape de décrassage, en procédant de préférence en deux étapes : avec ou sans vide jusqu'à 900°C et sous atmosphère neutre jusqu'à des températures variant de 1500 à 2200°C.

Cette opération se fait préférentiellement sans pression, mais elle peut être suivie d'un post-traitement thermique sous pression isostatique.

La demanderesse a constaté que les caractéristiques mécaniques optimales sont atteintes pour des températures de frittage de 1500 à 1650°C, les pièces de forme très allongée, telles que les barreaux, étant cependant avantageusement frittées à des températures élevées, atteignant 2200°C.

Le procédé selon l'invention permet d'obtenir des pièces de composites à matrice carbure de silicium dont les caractéristiques sont tout à fait performantes en conditions sévères d'utilisation, sans nécessiter la mise en place de moyens onéreux et avec des cycles de fabrication compatibles avec celui des moyennes séries, soit inférieurs à quinze jours.

L'invention sera mieux comprise à la lecture de l'exemple de réalisation ci-après, donné uniquement à titre d'illustration.

Il est à noter que la pièce n'a pas besoin d'être supportée pendant l'opération de frittage.

### Exemple :

On bobine à 90° sur un mandrin de diamètre 146 mm des fibres de carbone du type PAN TORAY T 400H B 3000 40B, la solution d'imprégnation étant constituée d'un sirop de résine résol NORSOPHEN 1703 dilué à 50 % (M/M) dans l'acétone et chargé de carbure de silicium dopé au bore.

Le carbure de silicium utilisé dans le sirop d'imprégnation a été préalablement broyé de façon à avoir une granulométrie inférieure à 5µm et permettre une bonne dispersion dans le sirop.

La teneur en carbure de silicium du sirop est de 50 % en poids.

La viscosité du sirop est comprise entre 0,6 et 1,5 Pa·s (600 et 1500 cP), ce qui permet une bonne enduction de la mèche par la résine et le carbure de silicium tout en limitant la quantité de résine emportée.

La vitesse de bobinage est réglée à 15 tr/min de manière à obtenir une bonne imprégnation de la mèche, la tension du fil étant comprise entre 400 et 600 g, participant ainsi à l'étalement de la mèche. Pour la mèche choisie, le pas est de 1,5 mm ce qui donne un bobinage jointif.

La finition est assurée par l'utilisation d'un tissu à délaminer.

Après séchage, le bobinage subit un cycle de polymérisation pendant 4h à 90°C.

Il est ensuite soumis à un cycle de décrassage sous air consistant en une opération de montée à 250°C en trois jours, le cycle de décrassage sous azote durant également trois jours avec une température de fin de cycle de 600°C.

On procède ensuite au frittage du produit en deux étapes :
- la première sous vide jusqu'à 900°C en trois heures ;
- la seconde sous azote jusqu'à 1700°C, sans application de pression.

La durée du cycle de frittage est de 13h30 avec un palier de 3 heures.

On obtient ainsi un composite à matrice céramique densifié à 80 %, présentant les caractéristiques suivantes:
- résistance de rupture en flexion 322 MPa
- résistance de rupture N.O.L. 435 MPa

## Revendications

1. Procédé d'obtention d'un composite densifié qui résiste à des contraintes mécaniques et thermiques en milieu oxydant et/ou réducteur et qui comprend une matrice carbure de silicium renforcée par des fibres réfractaires, caractérisé en ce qu'il comprend essentiellement les étapes successives consistant à :
- former un précurseur par bobinage de fibres réfractaires avec imprégnation simultanée par une résine contenant des particules de carbure de silicium ;
- soumettre le précurseur ainsi obtenu à un traitement thermique comprenant un cycle de décrassage utilisant le carbone libéré par la pyrolyse de la résine ; puis
- soumettre le précurseur ainsi traité à un traitement thermique de frittage des particules de carbure de silicium.

2. Procédé selon la revendication 1, caractérisé en ce que les fibres réfractaires sont des fibres de carbone.

3. Procédé selon la revendication 1 ou 2, caractérisé en ce que la quantité de carbure de silicium dans la résine est de 40 à 60% en poids.

4. Procédé selon l'une quelconque des revendications 1 à 3, caractérisé en ce que les particules de carbure de silicium ont une taille inférieure à 5 µm.

5. Procédé selon l'une quelconque des revendications 1 à 4, caractérisé en ce que le carbure de silicium est dopé au bore.

6. Procédé selon l'une quelconque des revendications 1 à 5, caractérisé en ce que la résine utilisée est une résine donnant un fort taux de coke, avec ou sans résidu de carbure ou de nitrure de silicium.

7. Procédé selon la revendication 6, caractérisé en ce que la résine est une résine phénolique.

8. Procédé selon l'une quelconque des revendications 1 à 7, caractérisé en ce que la viscosité de la résine d'imprégnation est comprise entre 0,6 et 1,5 Pa·s (600 et 1500 cP).

9. Procédé selon l'une quelconque des revendications 1 à 8, caractérisé en ce que le cycle de décrassage est effectué jusqu'à 250°C en milieu oxydant puis jusqu'à 600°C sous azote.

10. Procédé selon la revendication 9, caractérisé en ce que chaque étape du cycle de décrassage a une durée de trois jours.

11. Procédé selon l'une quelconque des revendications 1 à 10, caractérisé en ce que le frittage est réalisé en deux étapes.

12. Procédé selon la revendication 11, caractérisé en ce que le frittage est effectué avec ou sans vide jusqu'à 900°C puis sous atmosphère neutre jusqu'à des températures de 1500 à 2200°C.

13. Procédé selon la revendication 12, caractérisé en ce que le frittage est effectué sans application de pression.

14. Procédé selon l'une quelconque des revendications 1 à 13, caractérisé en ce que le frittage est suivi par un post-traitement thermique sous pression isostatique.

15. Couche pare-flamme de chambre de moteur statoréacteur, caractérisée en ce qu'elle est constituée d'un composite tel qu'obtenu par mise en oeuvre du procédé selon l'une quelconque des revendications 1 à 14.

## Patentansprüche

1. Verfahren zur Herstellung eines verdichteten Verbundwerkstoffs, der mechanischen und thermischen Beanspruchungen unter oxidierender und/oder reduzierender Atmosphäre wiedersteht, und der eine mit hitzebeständigen Fasern verstärkte Siliciumcarbidmatrix aufweist,
dadurch gekennzeichnet, daß es im wesentlichen die folgenden Schritte umfaßt:
- Ausbilden eines Vorläufers mittels Aufwickelns von hitzebeständigen Fasern unter gleichzeitiger Imprägnierung mit einem Siliciumkarbidteilchen enthaltenden Harz;
- den so erhaltenen Vorläufer einer Hitzebehandlung aussetzen, mit einem Reinigungszyklus unter Verwendung des aus dem Harz mittels Pyrolyse freigesetzen Kohlenstoffs; sodann
- den so behandelten Vorläufer einer thermischen Behandlung unterziehen zum Zusammensintern der Siliciumcarbidteilchen.

2. Verfahren nach Anspruch 1, dadurch gekennzeichnet, daß die hitzebeständigen Fasern Kohlenstoffasern sind.

3. Verfahren nach Anspruch 1 oder 2 dadurch gekennzeichnet, daß die Menge des Siliciumcarbids im Harz 40 bis 60 Gewichtsprozent beträgt.

4. Verfahren nach einem der Ansprüche 1 bis 3, dadurch gekennzeichnet, daß die Siliciumcarbidteilchen eine Größe unter 5 µm aufweisen.

5. Verfahren nach einem der Ansprüche 1 bis 4, dadurch gekennzeichnet, daß das Siliciumcarbid mit Bor dopiert ist.

6. Verfahren nach einem der Ansprüche 1 bis 5, dadurch gekennzeichnet, daß das verwendete Harz ein Harz ist, welches einen hohen Koksgehalt. mit oder ohne Rückstand von Siliciumcarbid, oder- nitrid ergibt.

7. Verfahren nach Anspruch 6, dadurch gekennzeichnet, daß das Harz ein phenolisches Harz ist.

8. Verfahren nach einem der Ansprüche 1 bis 7, dadurch gekennzeichnet, daß die Viskosität des Imprägnierungsharzes zwischen 0,6 und 1,5 Pa x s (zwischen 600 und 1500 cP) liegt.

9. Verfahren nach einem der Ansprüche 1 bis 8, dadurch gekennzeichnet, daß der Reinigungszyklus bis zu einer Temperatur von 250°C unter oxidierender Atmosphäre und sodann bis zu 600°C unter Stickstoff erfolgt.

10. Verfahren nach Anspruch 9, dadurch gekennzeichnet, daß jeder Schritt des Reinigungszyklus drei Tage dauert.

11. Verfahren nach einem der Anprüche 1 bis 10, dadurch gekennzeichnet, daß das Zusammensintern in zwei Schritten erfolgt.

12. Verfahren nach Anspruch 11, dadurch gekennzeichnet, daß das Zusammensintern mit oder ohne Vakuum bis zu einer Temperatur von 900°C sodann unter Neutralatmophäre bis zu Temperaturen von 1500 bis 2200°C erfolgt.

13. Verfahren nach Anspruch 12, dadurch gekennzeichnet, daß das Zusammensintern ohne Anwendung von Druck erfolgt.

14. Verfahren nach einem der Ansprüche 1 bis 13, dadurch gekennzeichnet, daß auf das Zusammensintern eine thermische Nachbehandlung unter isostatischem Druck erfolgt.

15. Flammschutzschicht für die Motorkammer eines Staustrahltriebwerkes, dadurch gekennzeichnet, daß es sich aus einem Verbundwerkstoff zusammensetzt, wie er mittels Durchführung des Verfahrens nach einem der Ansprüche 1 bis 14 erhalten wird.

## Claims

1. Process for obtaining a densified composite material that is resistant to mechanical and thermal stresses in an oxidizing and/or reducing medium and that comprises a silicon carbide matrix that is reinforced with refractory fibres, which process is characterised in that it comprises essentially the successive steps consisting of:
- forming a precursor by winding refractory fibres with simultaneous impregnation with a resin containing silicon carbide particles;
- subjecting the resulting precursor to a thermal treatment comprising a cleaning cycle using the carbon released by the pyrolysis of the resin; and then
- subjecting the precursor so treated to a thermal treatment of sintering the silicon carbide particles.

2. Process according to claim 1, characterised in that the refractory fibres are carbon fibres.

3. Process according to claim 1 or claim 2, characterised in that the quantity of silicon carbide in the resin is from 40 to 60% by weight.

4. Process according to any one of claims 1 to 3, characterised in that the size of the silicon carbide particles is less than 5 µm.

5. Process according to any one of claims 1 to 4, characterised in that the silicon carbide is doped with boron.

6. Process according to any one of claims 1 to 5, characterised in that the resin used is a resin that gives a high proportion of coke with or without a residue of silicon nitride or carbide.

7. Process according to claim 6, characterised in that the resin is a phenolic resin.

8. Process according to any one of claims 1 to 7, characterised in that the viscosity of the impregnating resin is from 0.6 to 1.5 Pa.s (from 600 to 1500 cP).

9. Process according to any one of claims 1 to 8, characterised in that the cleaning cycle is carried out at up to 250°C in an oxidizing medium and then at up to 600°C under nitrogen.

10. Process according to claim 9, characterised in that each stage of the cleaning cycle has a duration of three days.

11. Process according to any one of claims 1 to 10, characterised in that the sintering is carried out in two stages.

12. Process according to claim 11, characterised in that the sintering is carried out with or without vacuum at up to 900°C and then under a neutral atmosphere at temperatures of up to from 1500 to 2200°C.

13. Process according to claim 12, characterised in that the sintering is carried out without application of pressure.

14. Process according to any one of claims 1 to 13, characterised in that the sintering is followed by a thermal post-treatment under isostatic pressure.

15. Flame-protection layer of a ramjet engine chamber, characterised in that it is made of a composite material as it is obtained by implementing the process according to any one of claims 1 to 14.
